# EUROPEAN PATENT APPLICATION

(11) **EP 1 026 484 A1**
(43) Date of publication of application: **09.08.2000**
(21) Application number: 00300869.5
(22) Date of filing: 03.02.2000
(51) Int. Cl.: G01G 19/44, G01G 21/23

(54) **A platform scale**

(30) Priority: 03.02.1999 GB 9902403
(71) Applicant: HANSON INDUSTRIES INCORPORATED, Boulder, CO 80303 (US)
(72) Inventor: Neary, Padrig, c/o Hanson Industries Limited, Sligo (IE)
(74) Representative: Johnson, Terence Leslie

(57) **Abstract**

The invention comprises a platform scale 1, comprising a platform 2, a base, an operating mechanism 5, including a lever system, spaced apart corner bearings 22 depending from the platform 2 and being integral therewith, each bearing 22 being adapted to cooperate with a respective lever 7, 7a, 11, 11a of the lever system and means 26 to accommodate limited horizontal movement of the platform 2 relative to the lever system 6.

## Description

The invention relates to a platform for a platform scale, and a platform scale incorporating same, particularly such a scale as used for personal weighing.

Personal weighing scales are often formed with a platform supported over a base, with a mechanism therebetween which can respond to a weight applied to the platform as the platform moves towards the base under applied load. The mechanism is calibrated to give a readout of the weight applied.

In order to provide sensitivity in the mechanism, the platform is generally required to be light, strong and yet poised on bearings which enable it to deflect smoothly, so providing a positive action. Known scales require several separate bearing parts, and also the platform is often difficult to mount accurately on the mechanism.

It is accordingly an object of the invention to seek to mitigate disadvantages such as these.

According to one aspect of the invention there is provided a platform for a platform scale, comprising two pairs of spaced apart corner bearings depending from the platform and being integral therewith, each bearing being adapted to cooperate with a respective lever of a lever system of the scale whereby to operate an operating mechanism of the scale.

According to a second aspect of the invention there is provided a platform scale, comprising a platform, a base, an operating mechanism including a lever system, spaced apart corner bearings depending from the platform and being integral therewith, each bearing being adapted to cooperate with a respective lever of the lever system and means to accommodate limited horizontal movement of the platform relative to the lever system.

The accommodation means may comprise a part or parts of one or more of the levers. Preferably two of the bearings may cooperate with the accommodation means of two of the levers to allow said limited horizontal movement. The construction allows the platform to find its own "centre" in use.

The bearings may each comprise a U-shaped bearing part and the levers may each comprise a longitudinally extending support part including the accommodation means. This a relatively simple construction which allows limited movement.

The accommodation means may comprise a substantially flat root of a notch in the support part of a respective lever. This again is a relatively simple construction which allows for ease of manufacture by say stamping. The root may be from 1.8mm to 3.8mm in length. This provides for enough movement for centring, particularly where the root may be from 1.5mm to 3.5mm in length. The lever may be a main lever of the lever system. The secondary lever of the lever system may have a V-shaped notch to receive a respective U-shaped bearing part of a bearing.

The U-shaped bearing parts may each have a substantially flat bearing between the legs of the U-shape. This provides for ease and repeatability of manufacture.

The main levers may each include a recess for mounting a part of a secondary lever.

A platform for a platform scale, and a platform scale incorporating same, are hereinafter described, by way of example, with reference to the accompanying drawings.

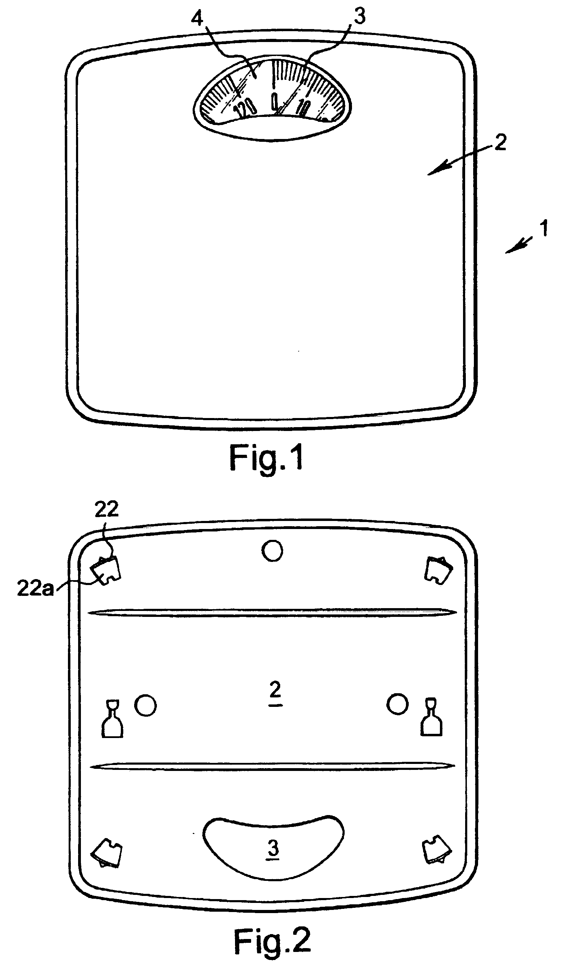

Fig. 1 is a plan view of a platform scale, showing the platform thereof from above;
Fig. 2 shows a view from below of the platform of Fig.1;
Fig. 3 shows a plan view of a base of the scale with the platform removed, revealing the operating mechanism;
Fig.4 shows a transverse section through the platform of the scale;

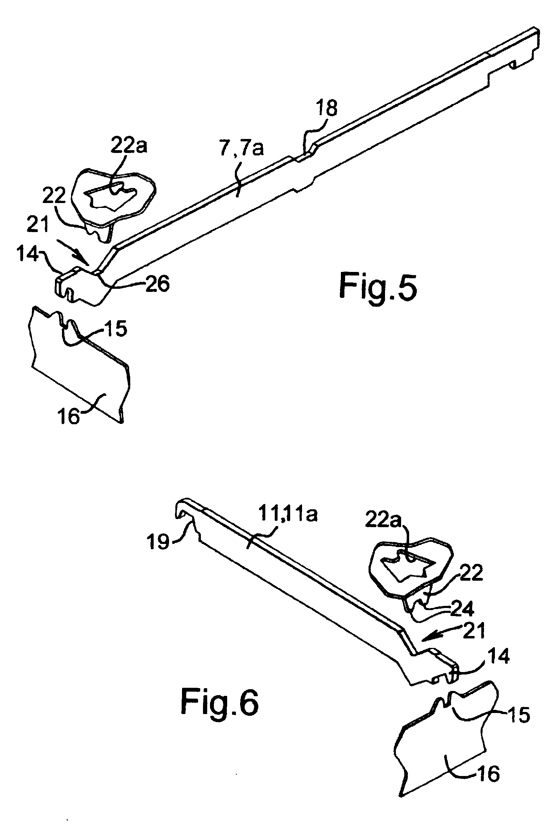

Fig. 5 shows a perspective exploded view of part of the operating mechanism including a main lever thereof;
Fig.6 shows a perspective view of part of the operating mechanism including a secondary lever thereof;

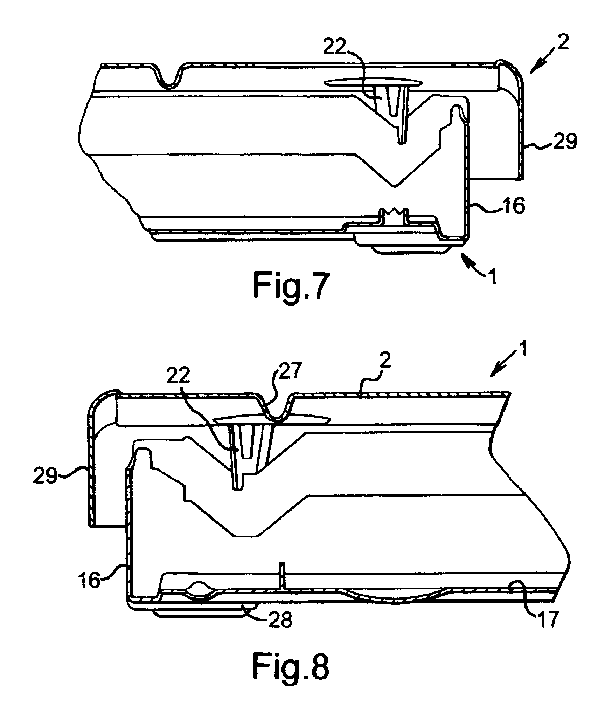

Fig. 7 shows a transverse sectional view of an enlarged scale of one corner of the platform scale; and
Fig. 8 shows a transverse sectional view to an enlarged scale of another corner of the platform scale.

Referring to the drawings there is shown a platform scale 1 of the personal weighing scale kind as is often found in a domestic bathroom, hotel room, health club, gymnasium and the like. Such a scale 1 has a platform 2, on which a user stands with a viewing aperture, lens or window 3 through which an indicator of weight such as part of a dial 4 operated by an operating mechanism 5 of the scale 1 is viewed. The operating mechanism 5 is calibrated as required, and can be set to zero and includes a lever system 6. There are two main levers 7, 7a extending from opposite corners 8, 8a of one side or end 9 of the scale 1 to a part 10 of the operating mechanism 5. There are also two secondary levers 11, 11a extending from opposite corners 12, 12a of the other side or end 13 of the scale 1 interiorly thereof and arranged to be mounted on a respective main lever intermediate the length thereof. Each lever 7, 7a, 11, 11a is usually stamped from metal and is flat, being mounted on edge so that its major surfaces extend substantially vertically in use. Each lever 7, 7a, 11, 11a has a hook or jaw 14 which is received in a mount or seat 15 formed in an upstanding wall 16 of a base 17 of the scale 1.

The main levers 7, 7a each have a recess 18 with a flat base intermediate their length for receiving a hook or jaw 19 of a respective secondary lever.

Each of the four levers 7, 7a, 11, 11a also has a downwardly, in use, extending notch 21 for receiving a respective cornerstand or bearing 22 which is integral with and depends downwardly from the platform 2 being formed as by stamping or pressing where the platform is made of metal, leaving an orifice 22a in the platform. The corner bearings or cornerstands 22 are identical, and comprise a U-shaped bearing part 23 having a channel defined by the legs 24 which has a substantially flat base 25. The notches 21 in the main levers 7, 7a have a flat root 26, of 1.5mm to 3.5mm in length, (depending on the levers used) extending longitudinally of the main levers 7, 7a. There are dimples 27 in the platform to provide a bearing on the levers for transmitting a load from the platform to the operating mechanism, and pressed out feet 28 in the base 17 to provide a support, the flat form 2 having a depending skirt 29 which extends downwardly below the upper use edge of the wall 16 to provide a neat appearance. A cover or sheet is usually applied to the upper surface of the platform to conceal the orifices 22a and the dimples 27.

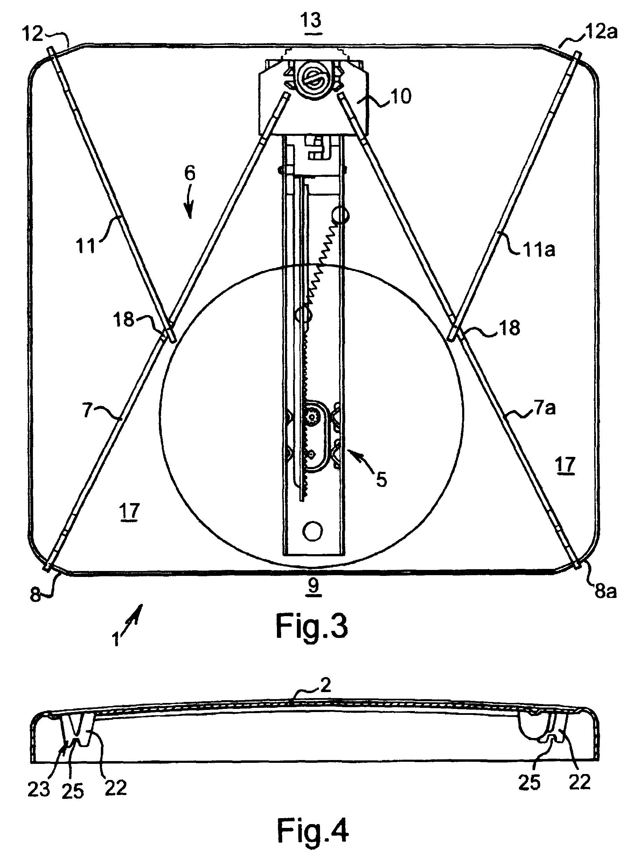

In assembly of the scale 1, the platform 2 is set down on the base 17 so that the cornerstands or bearings 22 each enter a notch 21 of a respective lever 7, 7a, 11 or 11a, which are already mounted on end on the base 17 as shown in Fig. 3.

The flat support section 26 of each main lever 7, 7a facilitates the respective cornerstands 22 locating at the correct position of the secondary levers 11, 11a and in such a position on the flat section 26 as determined by the position of the corner stands 22 derived from the fixed position of the secondary levers 11, 11a which have a true V-notch. Thus the platform 2 can be moved relative to the lever system 6 by the respective corner stands or bearings 22 moving along the flat support section 26 of the main levers 7, 7a assisted by the hooks 19 moving along the recesses 18. The movement which is accommodated is a limited movement, but allows the platform 2 to find its own "centre" relative to the lever system 6. This provides for accuracy of operation as the operating mechanism 5 can record a true applied weight without a "false weight" being added because of strain which would be imposed if there was no ability to provide limited movement. Moreover, as the bearing parts 22 are identical and integral with the material of platform 2, there are no separate parts which can be lost and no separate operation to fit separate parts is required, hence there is a manufacturing advantage too. It will be understood that any shape of support section 26 which can accommodate a limited lateral movement of the bearings 22 could be used, such as a curve, or U-shape or the like. Furthermore the secondary levers 11, 11a may be provided with similar means to accommodate said movement in addition to or instead of the main levers 7, 7a.

## Claims

1. A platform for a platform scale, comprising two pairs of spaced apart corner bearings depending from the platform and being integral therewith, each bearing being adapted to cooperate with a respective lever of a lever system of the scale whereby to operate an operation mechanism of the scale.

2. A platform scale, comprising a platform, a base, an operating mechanism including a lever system, spaced apart corner bearings depending from the platform and being integral therewith, each bearing being adapted to cooperate with a respective lever of the lever system and means to accommodate limited horizontal movement of the platform relative to the lever system.

3. A platform scale according to Claim 2, wherein the accommodation means comprises a part or parts of one or more of the levers.

4. A platform scale according to Claim 3, wherein two of the bearings cooperate with the accommodation means of two of the levers to allow said limited horizontal movement.

5. A platform scale according to Claim 4, wherein the bearings each comprise a U-shaped bearing part and the levers each comprise a longitudinally extending support part including the accommodation means.

6. A platform scale according to Claim 5, wherein the accommodation means comprises a substantially flat root of a notch in the support part of a respective lever.

7. A platform scale according to Claim 6, the root being from 1.8mm to 3.8mm in length.

8. A platform scale according to Claim 7, the root being from 1.5mm to 3.5mm in length.

9. A platform scale according to any of Claims 5 to 8, the lever being a main lever of the lever system.

10. A platform scale according to Claim 9, secondary levers of the lever system having a V-shaped notch to receive a respective U-shaped bearing part of a bearing.

11. A platform scale according to Claim 10, the U-shaped bearing parts each having a substantially flat bearing between the legs of the U-shape.

12. A platform scale according to any of Claims 9 to 11, the main levers each including an intermediate recess for receiving a part of a secondary lever.
